# EUROPÄISCHE PATENTSCHRIFT

(11) **EP 4 147 099 B1**
(45) Veröffentlichungstag und Bekanntmachung des Hinweises auf die Patenterteilung: **21.10.2026**
(21) Anmeldenummer: 21754762.9
(22) Anmeldetag: 28.07.2021
(51) Int. Cl.: G05B 19/042, G06F 21/44, G06F 21/57, H04L 9/40

(54) **SYSTEM UND VERFAHREN ZUM VERIFIZIEREN VON KOMPONENTEN EINES INDUSTRIELLEN KONTROLLSYSTEMS**
SYSTEM AND METHOD FOR VERIFYING COMPONENTS OF AN INDUSTRIAL CONTROL SYSTEM
SYSTÈME ET PROCÉDÉ DE VÉRIFICATION DES COMPOSANTS D'UN SYSTÈME DE COMMANDE INDUSTRIEL

(30) Priorität: 04.08.2020 EP 20189417
(43) Veröffentlichungstag der Anmeldung: 15.03.2023
(73) Patentinhaber: Siemens Aktiengesellschaft, 80333 München (DE)
(72) Erfinder: PALMIN, Anna, 76187 Karlsruhe (DE); XIE, Xin, 76448 Durmersheim (DE)
(74) Vertreter: Siemens Patent Attorneys
(86) Internationale Anmeldenummer: PCT/EP2021/071108
(87) Internationale Veröffentlichungsnummer: WO 2022/028975

(56) Entgegenhaltungen:
- EP-A1- 3 518 133
- EP-A2- 2 009 524
- CN-A- 111 143 818
- US-A- 5 841 865

## Beschreibung

Die Erfindung betrifft ein System und ein Verfahren zum Verifizieren von Komponenten eines industriellen Kontrollsystems, vorzugsweise eines industriellen Kontrollsystems einer Automatisierungsanlage, insbesondere einer Produktions- oder Prozessanlage.

Darüber hinaus betrifft die Erfindung ein Computerprogramm.

Systeme und Verfahren zum Anbinden von Komponenten an ein industrielles Kontrollsystem beziehungsweise zum Anschließen von Komponenten an das Netzwerk einer industriellen Anlage sind aus dem Stand der Technik bekannt. Ein Beispiel eines solchen Systems ist ein sogenanntes Security Anomaly Detection Tool oder kurz Anomaly Detection Tool. Die Security Anomaly Detection Tools werden heute nicht nur zu ihrem primären Zweck (Anomaly Detection), sondern zunehmend auch dazu eingesetzt, die Anlagenkomponenten samt deren wichtigen Daten in einer Liste/einem Inventory automatisch zu erfassen. Das Vorhandensein eines solchen Inventory ist beispielsweise im führenden Industrial Security Standard IEC 62443, Teil 3-3 für die Erreichung von Security Levels 2 bis 4 ausdrücklich gefordert (siehe dazu z.B. die Anforderung "11.10 SR 7.8 - Control system component inventory: The control system shall provide the capability to report the current list of installed components and their associated properties*."* Die automatische Erfassung der Anlagenkomponenten durch Security Anomaly Detection Tools hat gegenüber der manuellen Erfassung den Vorteil, dass sie sofort nach dem Anschließen der Komponenten an das Netzwerk ohne jegliche Mitwirkung des Anlagenpersonals erfolgt. Dadurch werden einerseits der erforderliche Zeitaufwand und andererseits die Fehlerwahrscheinlichkeit stark reduziert. Durch diese Art der Erfassung der Anlagenkomponenten wird insbesondere der Gerätetausch zur Laufzeit unterstützt, der ein sehr wichtiges Szenario im industriellen Umfeld repräsentiert.

Die heutigen Security Anomaly Detection Tools können bei Bedarf u.a. herstellerspezifische Gerätedaten aus den erfassten Netzwerkpaketen, die die Komponente an Operator Station (OS) oder an Enginnering Station (ES) sendet, extrahieren und sie nach bestimmten Kriterien verifizieren. Dabei kann beispielsweise die Zugehörigkeit eines bestimmten Gerätes zu einem bestimmten Hersteller anhand der von dem Hersteller vergebenen MAC-Adresse geprüft werden. Ein Angreifer könnte jedoch auch die MAC-Adresse aus dem von einem Original-Gerät verschickten Paket auslesen, diese MAC-Adresse in ein selbstgebautes Gerät einfügen und sich somit als das Original-Gerät auszugeben. Im Allgemeinen sind die MAC-Adressen zwar prinzipiell an die Hersteller gebunden, haben aber den Nachteil, dass sie änderbar/ konfigurierbar sind.

Da das Security Anomaly Detection Tool - wie oben erwähnt - die erfassten Anlagenkomponenten samt deren Daten (u.a. deren MAC-Adressen) in einer Liste/einem Inventory (das in der Regel nicht geschützt ist) ablegt, könnte ein Angreifer aber auch die MAC-Adresse beispielsweise aus der Dokumentation zum Original-Gerät herausnehmen und zum Vortäuschen der Identität eines Original-Gerätes missbrauchen.

Die vorgenannten Nachteile ergeben sich dadurch, dass die von einem Anomaly Detection Tool erfassten relevanten Gerätedaten nicht ausreichend zuverlässig und vertrauenswürdig sind, was zur Folge hat, dass die Originalität der von dem Anomaly Detection Tool erfassten Anlagenkomponenten, d.h. deren Identität und die Zugehörigkeit zu deren Hersteller nicht eindeutig nachweisbar und vertrauenswürdig ist. Somit können die nachgebauten und/oder manipulierten Fake-Geräte als Original-Geräte im Inventory einer Anlage angelegt werden und sich anschließend an der Kommunikation beteiligen, obwohl sie nicht vertrauenswürdig sind und ggf. (aus Nachlässigkeit oder vorsätzlich) die Systemintegrität und Verfügbarkeit der Anlage gefährden. Im Kontext der Industrial Security macht dies die Suche nach Lösungen, die das Risiko für die oben beschriebenen Manipulationen verringern (oder im Idealfall ausschließen) und somit ein höheres Schutzniveau ermöglichen, notwendig.

Die Druckschrift EP3518133 offenbart ein zur Verifizierung von Komponenten eine Kontrollsystems mit Hilfe eines für die Komponenten charakteristischen Zertifikats.

Somit kann die Aufgabe der vorliegenden Erfindung darin gesehen werden, die eingangs genannten Systeme und Verfahren hinsichtlich Sicherheit zu verbessern.

Die Aufgabe wird mit einem System der eingangs genannten Art erfindungsgemäß dadurch gelöst, dass das System ein erstes Modul und ein zweites Modul umfasst, wobei das erste Modul dazu konfiguriert ist, eine Vertrauensbeziehung in Form einer vertraulichen Verbindung mit Hilfe einer in der Komponente sicher hinterlegten Whitelist mit einer Komponente des industriellen Kontrollsystems aufzubauen und ein Komponentenzertifikat von der Komponente abzufragen, wobei das Komponentenzertifikat relevante Informationen bezüglich der Komponente aufweist, und das zweite Modul dazu konfiguriert ist, das Komponentenzertifikat basierend auf in einer vertrauenswürdigen Datenbank verwahrten relevanten Daten), wobei die relevanten Daten eine oder mehrere Vertrauensketten und eine oder mehrere Zertifikatssperrlisten umfassen, und interagierend mit der Komponente (z.B. hinsichtlich der Echtheit der Komponente) zu prüfen wobei bei der Prüfung eine oder mehrere Vertrauensketten und eine oder mehrere Zertifikatssperrlisten validiert werden, wobei das System ein weiteres Modul umfasst, das konfiguriert ist, auf das Ergebnis der Prüfung dadurch adäquat zu reagieren, indem in Abhängigkeit von dem Ergebnis der Prüfung weitere Kommunikation zwischen der Komponente und anderen Anlagenkomponenten unterbunden wird.

Dabei kann das System in Reaktion auf das Ergebnis der Prüfung beispielsweise eine entsprechende Meldung, z.B. einen Alarm generieren und/oder eine entsprechende Aktion, z.B. Unterbrechen der Kommunikation mit der Komponente, einleiten.

Das System kann somit den Status (abgelaufen / nicht abgelaufen, revoziert / nicht revoziert, etc.) des Zertifikats der Komponente selbst und/oder den Status des Zertifikats der übergeordneten Certification Authority (die das Zertifikat der Komponente ausgestellt hat) und/oder den Status des Zertifikats der sog. Root Certification Authority (die den Vertrauensanker, engl. Trust Anchor, bildet) prüfen.

Beim Anschließen der Komponente baut das System, welches beispielsweise als Anomaly Detection Tool ausgebildet sein kann, eine vertrauliche Verbindung mit der Komponente auf und fordert die Komponente, ein Komponentenzertifikat an das System zu übersenden, damit das Komponentenzertifikat von dem System interaktiv (in Interaktion mit der Komponente) geprüft werden kann. Die Erfüllung der Aufgabe, das Komponentenzertifikat mit der Komponente interagierend zu prüfen, wird von dem zweiten Modul vorgenommen. Das bedeutet, dass das zweite Modul mit der Komponente interagiert und gleichzeitig das Komponentenzertifikat prüft bzw. während der Prüfung des Komponentenzertifikats mit der Komponente interagiert, um hinsichtlich der Prüfung relevante Informationen mit der Komponente auszutauschen.

"Vertrauenswürdig" bedeutet im Kontext der vorliegenden Offenbarung "vor Einfluss/Eingriff Dritter geschützt", insbesondere "nicht manipulierbar" und "authentizitätsgeschützt" bzw. "authentisch". Eine im Sinne dieser Offenbarung als vertrauenswürdig geltende Datenbank zeichnet sich insbesondere dadurch aus, dass die (komponentenspezifischen) Einträge (beispielsweise der Name und die Seriennummer der Komponenten sowie insbesondere der Status der Überprüfung) nicht unbemerkt manipuliert werden können.

Der Aufbau einer Vertrauensbeziehung zwischen dem System bspw. dem Anomaly Detection Tool und der Komponente kann dabei mit Hilfe einer in der Komponente (beispielsweise während der Inbetriebnahme) sicher hinterlegten Whitelist oder durch Ausführen einer zertifikatsbasierten Authentifizierung erfolgen. Im Falle der Verwendung einer Whitelist kann die Komponente nachprüfen, ob das Anomaly Detection Tool in der Liste eingetragen ist. Im Falle einer zertifikatsbasierten Authentifizierung kann die Komponente anhand bestimmter Kriterien und in dieser Komponente sicher hinterlegten Daten nachprüfen, ob sie dem Zertifikat des Anomaly Detection Tools, unter dessen Verwendung das Anomaly Detection Tool sich ihr gegenüber authentifiziert, und somit dem Anomaly Detection Tool selbst vertraut. Durch die zertifikatsbasierte Authentifizierung kann ein höheres Security- bzw. Vertrauens-Niveau als durch die Filterung mit Hilfe einer Whitelist zu erreichen sein.

Das Komponentenzertifikat enthält relevante Informationen über die Komponente. Die relevanten Informationen können beispielsweise aber nicht ausschließlich herstellerspezifische Informationen, wie z.B. Hersteller X, Gerätewerk Y etc., und/oder OEM(engl. Original Equipment Manufacturer)-spezifische und/oder integratorspezifische und/oder kundenanlagen- bzw. kundenteilanlagenspezifische Informationen umfassen.

Das Komponentenzertifikat wird in Interaktion mit der Komponente und basierend auf den relevanten Daten geprüft, welche in einer vertrauenswürdigen Datenbank verwahrt werden. Die (für die Prüfung) relevanten Daten können beispielsweise in einem Zertifikat-Repository des Komponentenherstellers aufbewahrt werden. Dabei kann das System beispielsweise auf die vertrauenswürdige Datenbank oder auf das Zertifikat-Repository zugreifen, um einen Datenabgleich zwischen dem von der Komponente zur Verfügung gestellten Zertifikat und den Zertifikaten des Herstellers aus dem Zertifikat-Repository durchzuführen. Je nach Ergebnis der Prüfung kann das System eine entsprechende Meldung generieren und/oder ein Ausschließen der Komponente aus der Kommunikation im Netz des industriellen Kontrollsystems bewirken.

Das Komponentenzertifikat kann beispielsweise aber nicht ausschließlich von einem OEM (z.B. von einem Ingenieurbüro), einem Integrator oder in einem anderen Bereich der Kundenanlage (beispielsweise im Wareneingang) ausgestellt sein, und somit eine Bindung der Komponente an diesen OEM/ Integrator /die Kundenanlage repräsentieren.

In diesem Fall können die für die Verifikation relevanten Daten beispielsweise aber nicht ausschließlich herstellerspezifische Daten, wie z.B. Hersteller "X", Gerätewerk "Y", Zertifikat "ABC" etc., und/oder OEM-spezifische Daten und/oder integratorspezifische Daten und/oder kundenanlagen- bzw. kundenteilanlagenspezifische Daten umfassen.

Somit sind alle hier beschriebenen Ausführungsformen auch in dem Fall gültig, wenn das Komponentenzertifikat die Komponente an den OEM/Integrator oder die jeweilige Kundenanlage bindet. Je nach dem Aussteller des Komponentenzertifikats werden die entsprechenden Daten (für die Prüfung) verwendet.

Somit weist das System die Fähigkeit auf, eine fundierte und nicht-manipulierbare Verifikation der Identität und der Originalität (der Zugehörigkeit von Anlagenkomponenten zu deren Herstellern) durchzuführen. Die Verifikation kann ad-hoc (im Bedarfsfall, beispielsweise sofort nach dem Anschließen der Komponente an das Netzwerk) oder zyklisch proaktiv durchgeführt werden.

Darüber hinaus reagiert das System auf das Ergebnis der Prüfung adäquat, indem es beispielsweise eine entsprechende Meldung generiert und/oder eine entsprechende Aktion, z.B. Unterbrechen der Kommunikation mit der Komponente, einleitet.

Die Verifizierung der Komponenten und folglich ihre Erfassung in dem industriellen Kontrollsystem kann anhand des Systems vollautomatisiert erfolgen.

Im Zusammenhang mit der vorliegenden Erfindung wird unter dem Begriff "Modul" ein Hardware- oder ein Software-Modul oder eine Mischung von Hardware- und Software-Modulen verstanden.

Insbesondere kann das erste und das zweite Modul des Systems jeweils als ein Softwaremodul, beispielsweise als ein entsprechender Teil eines Programmcodes ausgebildet sein.

Insbesondere kann ein Modul physische und/oder logische Teilmodule umfassen.

Bei einer Ausführungsform kann es zweckmäßig sein, wenn die Komponente konfiguriert ist, bei der Prüfung ihren privaten Schlüssel zum Komponentenzertifikat zu verwenden, ohne diesen privaten Schlüssel preiszugeben. Dabei kann die Komponente unter Verwendung eines geeigneten kryptographischen Verfahrens gegenüber dem System beweisen, dass sie (die Komponente) den privaten Schlüssel (engl. Private Key) zum Komponentenzertifikat (bzw. zu dem in dem Komponentenzertifikat enthaltenen öffentlichen Schlüssel, engl. Public Key) kennt, ohne diesen preiszugeben.

Bei einer Ausführungsform kann es zweckdienlich sein, wenn das System einen sicheren, vorzugsweise gegen unberechtigte Änderungen beziehungsweise Manipulationen geschützten (z.B. physischer oder logischer) Speicher oder Speicherort aufweist und dazu konfiguriert ist, die relevanten Daten von der vertrauenswürdigen Datenbank, z.B. von dem Zertifikat-Repository des Herstellers (der Komponente), in regelmäßigen Zeitabständen oder ereignisgesteuert (z.B. getriggert durch Änderungen der Zertifikate bzw. der dazugehörigen Trust Chains oder der Sperrlisten seitens des Herstellers) über eine sichere Verbindung zu beziehen und auf dem sicheren Speicher zu hinterlegen oder zu installieren.

Im Allgemeinen wird unter dem Begriff "sicher" im Rahmen der vorliegenden Offenbarung eine Sicherheit im Sinne der IT-Sicherheit bzw. der "Cyber Security" (insb. hinsichtlich der drei wichtigsten Schutzziele "Integrität", "Vertraulichkeit" und "Verfügbarkeit" sowie des Schutzziels "Authentizität", das in dieser Offenbarung eine wichtige Rolle spielt) verstanden. Eine sichere Komponente oder ein sicherer Speicher bedeutet insbesondere, dass diese oder dieser gegen unberechtigte Zugriffe durch entsprechende Schutzmaßnahmen / Schutzmechanismen abgesichert ist.

Beispielsweise kann das zweite Modul den sichereren (z.B. physischen oder logischen) Speicher bzw. Speicherort umfassen, auf dem beispielsweise die Zertifikate und die zugehörigen Trust Chains und/oder Zertifikatssperrlisten abgelegt werden können. Somit kann das zweite Modul beispielsweise einen physischen Teil, der als physischer sicherer Speicher ausgebildet ist, und ein Softwaremodul aufweisen, wobei das Softwaremodul zum Durchführen der vorgenannten Funktion - Beziehen der für die Prüfung relevanten Daten und deren Hinterlegen oder Installieren auf dem sicheren Speicher bzw. Speicherort - eingerichtet ist.

Bei einer Ausführungsform kann vorgesehen sein, dass die Prüfung drei mögliche Ergebnisse aufweisen kann: "Prüfung erfolgreich", "Prüfung fehlgeschlagen" oder "Prüfung ist nicht möglich".

Das Ergebnis der Prüfung "Prüfung ist nicht möglich" kann beispielsweise dann auftreten, wenn sich beim Vergleich der Zertifikate herausstellt, dass ein entsprechendes Zertifikat unter den Komponentenherstellerzertifikaten fehlt.

Bei einer Ausführungsform kann vorgesehen sein, dass das Komponentenzertifikat ein Herstellergerätezertifikat ist. Im Gegensatz zu einer MAC-Adresse kann ein Komponentenzertifikat und insbesondere ein Herstellergerätezertifikat nicht erfolgreich manipuliert werden. Das bedeutet beispielsweise, dass ein nachgebautes oder manipuliertes Gerät, welches (im Gegensatz zum Originalgerät) nicht über den privaten Schlüssel zum Herstellergerätezertifikat verfügt, nicht erfolgreich nachweisen kann, dass das Herstellergerätezertifikat ihm gehört.

Bei einer Ausführungsform kann es vorteilhaft sein, wenn die relevanten Daten Vertrauensketten (engl. Trust Chain) und eine Zertifikatssperrliste bzw. Zertifikatssperrlisten umfassen, wobei die Vertrauensketten zum Komponentenzertifikat gehören sollen. Wenn dabei beispielsweise die Vertrauensketten auf einem sicheren (physischen oder logischen) Speicher bzw. Speicherort des Systems hinterlegt sind, kann die Prüfung schnell erfolgen, indem das Komponentenzertifikat mit den hinterlegten Vertrauensketten des Herstellers verglichen werden. Wenn die Zertifikatssperrlisten vom Hersteller vorliegen, kann das System auch den Revokationsstatus prüfen und, ob das Komponentenzertifikat, das gerade geprüft wird, gesperrt ist oder nicht.

Eine "Vertrauenskette" bzw. "Zertifikatskette" (engl. "Trust Chain" oder "Chain of Trust") ist ein Fachmann bekannter Begriff. In einem Profil namens "Internet X.509 Public Key Infrastructure Certificate and Certificate Revocation List (CRL) Profile", welches im Rahmen von RFC 5280 entwickelt wurde, wird "Vertrauenskette" bzw. "Zertifikatskette" als "Zertifizierungspfad" definiert. Dazu heißt es dort: *"Generell kann eine Kette von mehreren Zertifikaten erforderlich sein, die ein von einer CA signiertes Zertifikat des Eigentümers des öffentlichen Schlüssels (der End-Entität) sowie null oder mehr zusätzliche Zertifikate von CAs umfasst, die von anderen CAs signiert sind. Solche* Ketten, *Zertifizierungspfade genannt, sind erforderlich, weil ein Benutzer eines öffentlichen Schlüssels nur mit einer begrenzten Zahl verbürgter öffentlicher CA-Schlüssel initialisiert wird."*

Unter dem Begriff "Vertrauenskette" wird im Rahmen der vorliegenden Offenbarung insbesondere eine Liste von Zertifikaten (Zertifikatskette) verstanden, die vorzugsweise mit einem Zertifikat einer End-Entität beginnt, gefolgt von einem oder mehreren CA-Zertifikaten, von denen das letzte beispielsweise ein selbstsigniertes Zertifikat ist.

Bei der Prüfung einer Vertrauenskette wird vorzugsweise jedes Zertifikat aus der Kette bzw. der Liste geprüft bzw. validiert.

Die Zertifikatskette kann folgende Eigenschaften aufweisen. Erstens, der Aussteller jedes Zertifikats (außer dem letzten) entspricht dem Subjekt des nächsten Zertifikats auf der Liste. Zweitens, jedes Zertifikat (außer dem letzten) soll mit einem geheimen Schlüssel für das nächste Zertifikat in der Kette signiert sein, sodass die Signatur eines Zertifikats mithilfe des öffentlichen Schlüssels im folgenden Zertifikat verifiziert werden kann. Drittens, das letzte Zertifikat in der Liste ist ein Vertrauensanker: ein Zertifikat, dem vertraut wird, weil es durch ein vertrauenswürdiges Verfahren zur Verfügung gestellt wurde. Ein Vertrauensanker ist ein CA-Zertifikat (oder genauer gesagt, der öffentliche Prüfschlüssel einer CA), das von einer vertrauenden Partei (relying party) als Ausgangspunkt zur Pfad-Validierung verwendet wird.

Bei einer Ausführungsform kann es mit Vorteil vorgesehen sein, dass das System ein drittes Modul umfasst, das konfiguriert ist, relevante Informationen aus dem Komponentenzertifikat in ein computerimplementiertes Geräteinventar aufzunehmen und diese relevanten Informationen entsprechend dem Ergebnis der Prüfung zu kennzeichnen, beispielsweise zu highlighten oder mit einem adäquaten Status und/oder Flag zu versehen.

Vorzugsweise umfasst das dritte Modul das computerimplementierte Geräteinventar.

Bei einer Ausführungsform kann es zweckdienlich sein, wenn das System ein viertes Modul umfasst, das konfiguriert ist, unterschiedliche Prüfungsprofile für die Prüfung unterschiedlicher Komponenten zu erstellen und/oder zu konfigurieren und/oder zu nutzen, wobei die Prüfungsprofile einen Ablauf der Prüfung charakterisieren.

Im Rahmen der vorliegenden Offenbarung werden unter dem Begriff "Prüfungsprofile" beispielsweise verschiedene Verfahren/Abläufe verstanden, die - je nach Komponente - zum Einsatz kommen, um eine Prüfung für diese Komponente durchzuführen. Somit sind die Prüfungsprofile komponentenspezifische Prüfverfahren, die verwendet werden, um die Prüfung der Komponente interagierend durchzuführen.

Beispielsweise kann die Prüfung für eine Komponente, die TLS (Transport Layer Security := Transportschichtsicherheit) verwendet, in Form eines TLS Handshakes technisch gestaltet werden. Dabei verwendet die Komponente ihr Komponentenzertifikat als TLS Server Zertifikat und beweist gegenüber der Prüfinstanz / dem System (z.B. gegenüber dem Anomaly Detection Tool) insbesondere, dass sie den Private Key zu dem auf dem Zertifikat aufgeführten Public Key kennt, ohne diesen jedoch preiszugeben. Eine andere Komponente, die beispielsweise nur OPC UA (Open Platform Communications Unified Architecture) "kann", kann beispielsweise einen Ablauf nach OPC UA Part 21 verwenden, um ihrem Gegenüber zu beweisen, dass sie den Private Key kennt. Dazu kann auch ein Challenge-and-Response-Verfahren verwendet werden, welches beispielsweise auch im Rahmen eines weiteren Profils berücksichtigt werden könnte.

Die Aufgabe der Erfindung wird auch mit einem computerimplementierten Verfahren der eingangs genannten Art erfindungsgemäß dadurch gelöst, dass
- eine Vertrauensbeziehung in Form einer vertraulichen Verbindung mit einer Komponente des industriellen Kontrollsystems mit Hilfe einer in der Komponente sicher hinterlegten Whitelist aufgebaut und ein Komponentenzertifikat von der Komponente abgefragt wird, wobei das Komponentenzertifikat relevante Informationen bezüglich der Komponente aufweist,
- das Komponentenzertifikat in Interaktion mit der Komponente und basierend auf in einer vertrauenswürdigen Datenbank verwahrten relevanten Daten), wobei die relevanten Daten eine oder mehrere Vertrauensketten und/oder eine oder mehrere Zertifikatssperrlisten umfassen, geprüft wird, wobei bei der Prüfung eine oder mehrere Vertrauensketten und/oder eine oder mehrere Zertifikatssperrlisten validiert werden, und
- auf das Ergebnis der Prüfung dadurch adäquat reagiert wird, indem in Abhängigkeit von dem Ergebnis der Prüfung weitere Kommunikation zwischen der Komponente und anderen Anlagenkomponenten unterbunden wird.

Dabei kann in Reaktion auf das Ergebnis der Prüfung beispielsweise eine entsprechende Meldung, z.B. einen Alarm generiert und/oder eine entsprechende Aktion, z.B. Unterbrechen der Kommunikation mit der Komponente, eingeleitet werden.

Bei einer Ausführungsform kann es mit Vorteil vorgesehen sein, dass die Komponente bei der Prüfung ihren privaten Schlüssel zum Komponentenzertifikat verwendet, ohne diesen privaten Schlüssel preiszugeben.

Bei einer Ausführungsform kann es vorteilhaft sein, wenn die relevanten Daten und vorzugsweise zusätzlich die OEM-spezifischen, Integrator-spezifischen oder kundenanlagenspezifischen Daten von der vertrauenswürdigen Datenbank in regelmäßigen Zeitabständen oder ereignisgesteuert über eine sichere Verbindung bezogen und auf einem sicheren Speicher hinterlegt oder, wenn diese z.B. Zertifikate umfassen, installiert werden.

Bei einer Ausführungsform kann es zweckmäßig sein, wenn das Komponentenzertifikat ein Herstellergerätezertifikat ist und/oder die relevanten Daten Vertrauensketten und/oder eine (oder mehrere) Zertifikatssperrliste(n) zum Komponentenzertifikat umfassen.

Bei einer Ausführungsform kann es mit Vorteil vorgesehen sein, dass relevante Informationen aus dem Komponentenzertifikat in ein computerimplementiertes Geräteinventar aufgenommen werden und diese relevanten Informationen entsprechend dem Ergebnis der Prüfung gekennzeichnet, beispielsweise gehighlightet oder mit einem adäquaten Status und/oder Flag versehen werden. Hierdurch kann ein automatisierter und dynamischer Aufbau des computerimplementierten Geräteinventars (engl. Device Inventory) erfolgen, wobei für den Aufbau relevante Gerätedaten und insbesondere der Status der Überprüfung verwendet werden kann.

Bei einer Ausführungsform kann es vorteilhaft sein, wenn unterschiedliche Prüfungsprofile für die Prüfung unterschiedlicher Komponenten erstellt und/oder konfiguriert und/oder genutzt werden, wobei die Prüfungsprofile einen Ablauf der Prüfung bzw. des Prüfverfahrens charakterisieren.

Hierdurch kann der Status der Überprüfung berücksichtigt oder für den Benutzer veranschaulicht werden. Dadurch kann der Benutzer entweder direkt oder indirekt im Rahmen der Konfiguration der entsprechenden Profile zur Auswahl einer adäquaten Reaktion miteinbezogen werden.

Offenbart ist auch ein computerimplementiertes Verfahren zum Erstellen oder zum Aktualisieren eines Geräteinventars. Wie oben erörtert, kann das computerimplementiertes Geräteinventar vorzugsweise sukzessiv und dynamisch ausgebaut, sodass es zumindest ein Komponentenzertifikat einer Komponente und eine der Komponente zugehörige Meldung umfasst, welche Meldung nach dem Verfahren generiert ist.

Obendrein wird die Aufgabe mit einem Computerprogramm erfindungsgemäß dadurch gelöst, dass das Computerprogramm Befehle umfasst, die bei der Ausführung des Programms durch ein System dieses veranlassen, das vorgenannte Verfahren auszuführen.

Außerdem wird ein interaktives Verifizieren einer Komponente eines industriellen Kontrollsystems unter Verwendung eines Komponentenzertifikats der Komponente offenbart.

Zusammenfassend werden Systeme und Verfahren bereitgestellt, die das Problem lösen, dass bestimmte relevante Gerätedaten, anhand derer Komponenten eines industriellen Kontrollsystems verifiziert werden, leicht manipulierbar und somit nicht vertrauenswürdig sind.

Ein weiterer Aspekt der vorliegenden Offenbarung besteht darin, dass in einer gleichen Umgebung verschiedene Prüfungsabläufe und Prüfinstanzen (die über eine Vertrauensbeziehung zum Inventory verfügen) gleichzeitig zum Einsatz kommen können. Alle auf verschiedene Art und Weise (bspw. gemäß den vorkonfigurierten und zur Laufzeit dynamisch konfigurierbaren Prüfprofilen) geprüften Komponenten bzw. deren relevanten Daten können in ein gemeinsames Inventory eingetragen werden, sodass der Benutzer eine einheitliche Übersicht über alle Komponenten der Anlage samt deren Überprüfungsstatus hat.

Im Folgenden wird die Erfindung anhand der in den Figuren dargestellten Ausführungsbeispiele näher beschrieben und erläutert. Es zeigen:
- FIG 1 bis FIG 4: Verifizieren von Anlagekomponenten mittels Anomaly Detection Tools nach dem Stand der Technik,
- FIG 5: interaktive Prüfung eines Herstellergerätezertifikats durch ein Anomaly Detection Tool,
- FIG 6: ein Anomaly Detection Tool,
- FIG 7: Eintragung der Prüfungsergebnisse in ein computerimplementiertes Geräteinventar,
- FIG 8: Beantragung eines Herstellergerätezertifikats durch ein Gerät,
- FIG 9: Ausstellung eines Herstellergerätezertifikats,
- FIG 10: ein weiteres Anomaly Detection Tool, und
- FIG 11: ein Flussdiagramm eines Verfahrens zum Verifizieren von Komponenten.

In den Ausführungsbeispielen und Figuren können gleiche oder gleich wirkende Elemente jeweils mit den gleichen Bezugszeichen versehen sein.

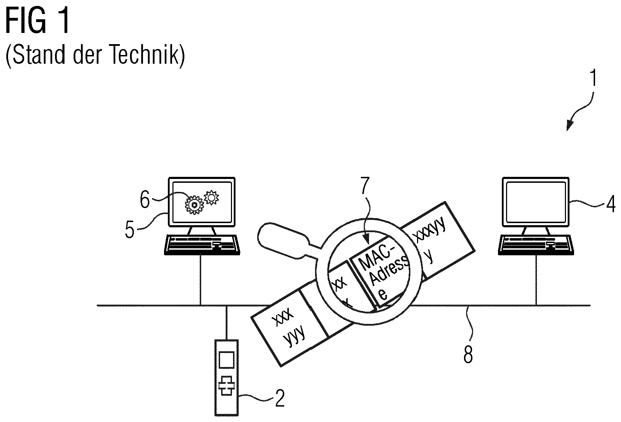

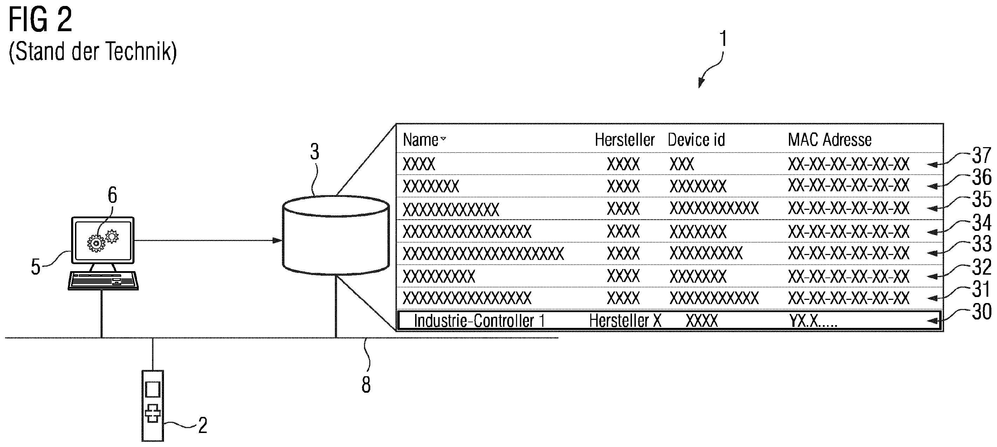

Zunächst wird auf Figuren 1 bis 4 Bezug genommen, die den Stand der Technik kurz umreißen. Figuren 1 bis 4 zeigen ein industrielles Kontrollsystem 1 einer Automatisierungsanlage, insbesondere einer Produktions- oder Prozessanlage. Die Komponenten des industriellen Kontrollsystems 1 sind beispielsweise über industrielles Ethernet 8 verbunden. Es versteht sich, dass die Komponenten des industriellen Kontrollsystems 1 auch über andere gängige Verbindungsarten, zum Beispiel WLAN, Bluetooth, WAN etc. zwecks Informationsaustausches verbunden sein können. Figuren 1 und 2 illustrieren eine Situation, bei der ein (neues) Gerät 2 an das industrielle Kontrollsystem 1 angeschlossen, verifiziert und in ein computerimplementiertes Geräteinventar 3 aufgenommen wird. Das Gerät 2 ist als Industrial Controller ausgebildet.

Beim Anschließen des Industrial Controllers 2 an das industrielle Kontrollsystem 1 tauscht das Industrial Controller 2 Informationen mit einem Server 4 aus, der beispielsweise Funktionalitäten einer Operator Station (OS) oder einer Enginnering Station (ES) aufweist und dazu konfiguriert ist, das Anschließen bzw. das Onboarding des Industrial Controllers durchzuführen.

Ein anderer Server 5 weist ein System 6 zum Verifizieren von Komponenten bzw. Geräten des industriellen Kontrollsystems 1 auf.

Die Server 4 und 5 müssen nicht gentrennt sein. Ihre Funktionalitäten kann ein einziger Server aufweisen (hier nicht dargestellt).

Das System 6 ist als ein Anomaly Detection Tool ausgebildet, welches dem Traffic zwischen dem Industrial Controller 2 und dem OS/ES-Server 4 lauscht, um die MAC-Adresse 7 des Industrial Controllers 2 abzulesen. Der Industrial Controller 2 ist ein Originalgerät.

Die Security Anomaly Detection Tools nach dem Stand der Technik können bei Bedarf u.a. herstellerspezifische Gerätedaten (z.B. MAC-Adressen 7) aus den erfassten Netzwerkpaketen extrahieren und sie nach bestimmten Kriterien verifizieren. Dabei kann u.a. die Zugehörigkeit eines bestimmten Gerätes zu einem bestimmten Hersteller anhand der von dem Hersteller vergebenen MAC-Adresse 7 geprüft werden.

Anhand der abgelesenen MAC-Adresse 7 kann das Anomaly Detection Tool 6 beispielsweise auf den Namen und auf den Hersteller des Geräts 2 schließen.

Nachdem das Anomaly Detection Tool 6 anhand der MAC-Adresse 7 die herstellerspezifischen Informationen ermittelt hat, legt es für das Gerät 2 einen neuen Geräteinventareintrag 30 in dem computerimplementierten Geräteinventar 3 an. Das Geräteinventar weist für gewöhnlich mehrere Einträte 30, 31, 32, 33, 34, 35, 36, 37 auf (FIG 2).

Ein für ein Gerät angelegter Geräteinventareintrag 30, 31, 32, 33, 34, 35, 36 oder 37 kann beispielsweise folgende (Meta-)Informationen enthalten:
- die Geräte MAC-Adresse 7,
- die Geräte-IP Adresse (statisch oder dynamisch),
- die Geräte-MLFB (statisch) (MLFB = Maschinenlesbare Fabrikatebezeichnung),
- das Herstellergerätezertifikat (engl. Manufacturer Device Certificate, MDC) (statisch),
- das anlagenspezifische bzw. anlagenbezogene Kundengerätezertifikat (engl. Customer Device Certificate, CDC),
- das projektbezogene Gerätezertifikat (engl. Project related Device Certificate, PDC) oder (falls das Gerät in mehreren Projekten eingesetzt wird) eine Mehrzahl an derartigen Zertifikaten (dynamisch),
- projektbezogene operative Zertifikate, die von der Geräteinstanz bereits bezogen wurden (dynamisch),
- weitere Informationen bzgl. der technischen und mechanischen Features, u.a. bzgl. der Performance und der unterstützten Kommunikations- und/oder Applikationsprotokolle (statisch und/oder dynamisch).

Das Geräteinventar 3 ist in der Regel nicht geschützt, sodass ein Angreifer die MAC-Adresse 7 beispielsweise aus der Dokumentation zum Originalgerät 2 herausnehmen und zum Vortäuschen der Identität eines Original-Gerätes missbrauchen kann.

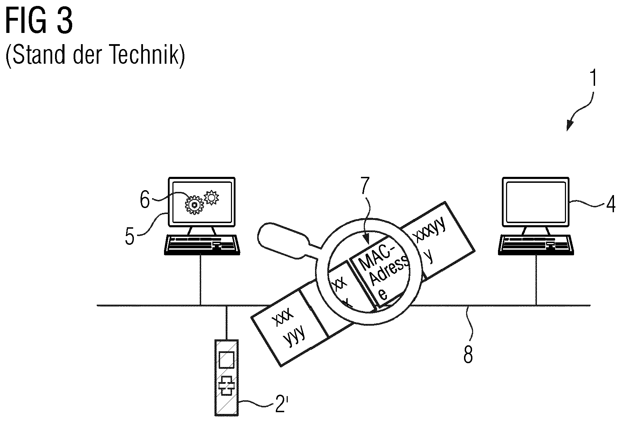

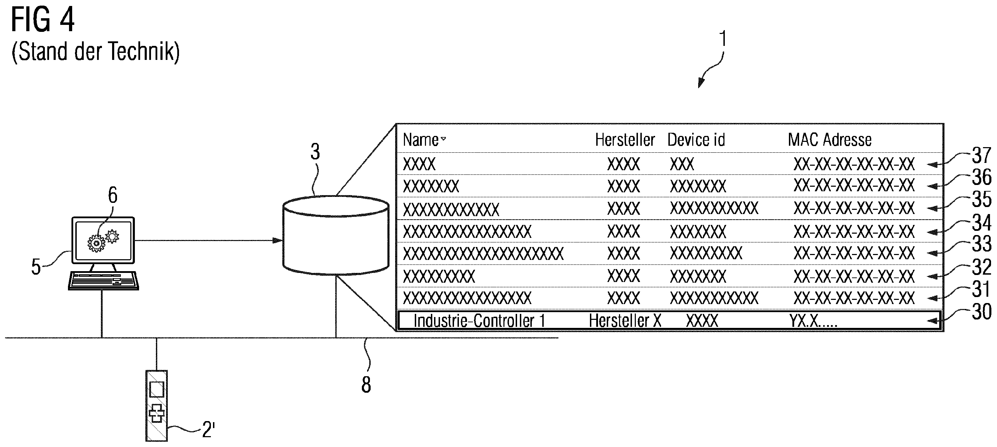

Ein möglicher Angriff dieser Art ist in Figuren 3 und 4 veranschaulicht.

FIG 3 illustriert das Anschließen eines manipulierten Geräts 2', zum Beispiel eines Industrial Controllers an das industrielle Kontrollsystem 1. Bei dem manipulierten Gerät 2' kann sich beispielsweise um ein nachgebautes Gerät handeln. Das manipulierte Gerät 2' ist kein Originalgerät 2. Dennoch weist das manipulierte Gerät 2' die MAC-Adresse 7 eines Originalgeräts 2 auf.

Nachdem das Anomaly Detection Tool 6 das entsprechende Netzwerkpaket erfasst und die MAC-Adresse 7 aus diesem Netzwerkpaket extrahiert hat, legt es einen entsprechenden Geräteinventareintrag 30 in dem computerimplementierten Geräteinventar 30 an (FIG 4). Da die MAC-Adresse 7 des manipulierten Geräts 2' und die MAC-Adresse 7 des Originalgeräts 2 identisch sind, wird das manipulierte Gerät 2' erfolgreich verifiziert, obwohl es kein Originalgerät 2 ist. Anschließend kann sich das manipulierte Fake-Gerät 2' als Originalgerät 2 an der Kommunikation in dem industriellen Kontrollsystem 1 der Anlage beteiligen, obwohl es nicht vertrauenswürdig ist und ggf. (aus Nachlässigkeit oder vorsätzlich) die Systemintegrität und Verfügbarkeit der Anlage gefährden.

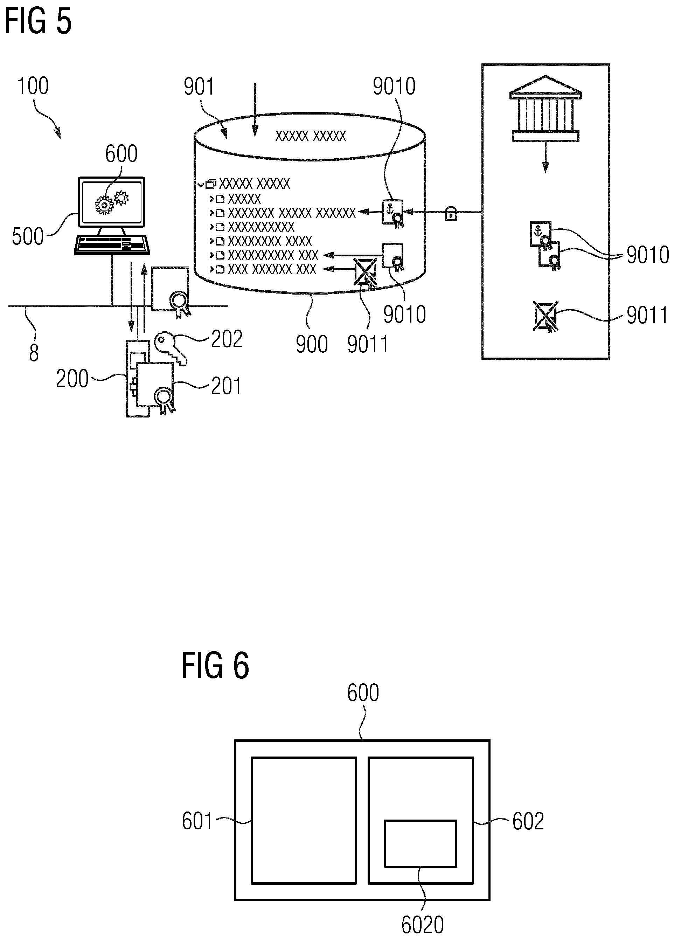

FIG 5 zeigt einen Ausschnitt eines industriellen Kontrollsystems 100 einer Automatisierungsanlage, insbesondere einer Produktions- oder Prozessanlage. Die Komponenten des industriellen Kontrollsystems 100 sind beispielsweise über industrielles Ethernet 8 verbunden. Es versteht sich, dass die Komponenten des industriellen Kontrollsystems 100 auch über andere gängigen Verbindungsarten, zum Beispiel WLAN, Bluetooth, WAN etc. zwecks Informationsaustausches verbunden sein können.

Das industrielle Kontrollsystem 100 weist eine als ein Industrial Controller ausgebildete Komponente 200 und einen Server 500 auf.

Zum Verifizieren der Komponente 200 weist der Server 500 ein Anomaly Detection Tool 600 auf, wobei das Anomaly Detection Tool 600 dem erfindungsgemäßen System entspricht.

Das Anomaly Detection Tool 600 umfasst ein erstes Modul 601 ein zweites Modul 602 auf (siehe FIG 6). Die Module 601 und 602 können beispielsweise als Softwaremodule ausgebildet sein. Denkbar ist es aber auch, dass zumindest eines der Module 601, 602 als eine Kombination von Soft- und Hardwarekomponenten ausgebildet ist.

Beim Anschließen der Komponente 200 baut das erste Modul 601 mit der Komponente 200 eine Vertrauensbeziehung auf, um ein Komponentenzertifikat 201 von der Komponente 200 abzufragen. FIG 5 lässt erkennen, dass der Industrial Controller 200 das Komponentenzertifikat 201 mit einem zu dem Komponentenzertifikat 201 zugehörigen öffentlichen Schlüssel umfassen kann.

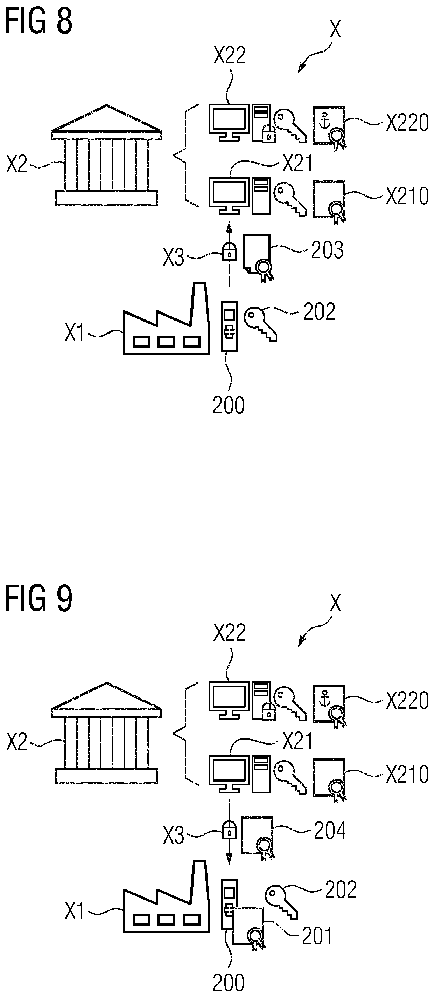

Um Beantragung und Erstellung des Komponentenzertifikats 201 zu veranschaulichen wird nun auf Figuren 8 und 9 Bezug genommen. Komponentenzertifikate wie das Komponentenzertifikat 201 können z.B. von einer dafür zuständigen vertrauenswürdigen ausstellenden Zertifizierungsstelle (engl. Issuing Certification Authority, kurz Issuing CA) des Herstellers ausgestellt und signiert werden. Außerdem sind Komponentenzertifikate an eine eindeutige ID (z.B. eine Seriennummer) der jeweiligen Komponente sowie an einen Geheimschlüssel (engl. Private Key) gebunden, wobei der Geheimschlüssel in der Komponente / in dem Gerät (z.B. softwaregebunden) bzw. im Idealfall in der Hardware der Komponente (hardwaregebunden) sicher hinterlegt ist.

Komponentenzertifikate können beispielsweise während der Fertigung in einem Gerätewerk in die zugehörigen Komponenten / Geräte gebracht werden.

Konkret illustrieren Figuren 8 und 9 Schritte einer Aufbringung eines Komponentenzertifikats in Form eines Herstellergerätezertifikats (MDC) 201 auf einen Industrial Controller 200.

Ein Hersteller X verfügt über / umfasst ein Gerätewerk X1, in dem Industrial Controller 200 hergestellt werden, und eine Public-Key-Infrastruktur mit einem Trust-Center X2 zum Ausstellen von vertrauenswürdigen Zertifikaten.

Während der Fertigung kann ein Geheimschlüssel 202 in der Hardware des Gerätes 200 generiert werden. Mit diesem Geheimschlüssel 202 kann das Gerät 200 anschließend einen Zertifikatsantrag 203 (engl. Certificate Signing Request) signieren und ihn über eine sichere Kommunikation X3, z.B. verschlüsselt, an eine zuständige Issuing Certification Authority X21, die sich z.B. in dem Trust-Center X2 des Herstellers X befinden kann, übermitteln.

Das Trust-Center X2 kann eine Root-Zertifizierungsstelle X22 (Root CA) umfassen, die (selbstsignierte) Root-Zertifikate / Vertrauensanker X220 erstellen kann. Die Issuing CA X21 kann Zertifikatsantrag 203 bearbeiten und basierend darauf ein Komponentenzertifikat 201 erstellen. Das Komponentenzertifikat 201 kann somit als eine Kette von Zertifikaten ausgebildet sein. Solche Zertifikatsketten werden auch als Zertifizierungspfade oder Vertrauensketten bezeichnet. Das letzte Zertifikat in der Vertrauenskette 201 ist ein von der Root CA X22 ausgestellter Vertrauensanker X220.

Der Zertifikatsantrag 203 enthält in der Regel einige wichtigen Gerätedaten (z.B. herstellerspezifische Gerätedaten), insbesondere den Namen des Herstellers ("X") und des Fertigungswerkes ("X1"), eine ID (z.B. Seriennummer) des Gerätes 200 sowie den öffentlichen Schlüssel (engl. Public Key) zu dem zum Signieren des Zertifikatsantrags 203 verwendeten Geheimschlüssel 202. Die Daten aus dem Zertifikatsantrag 203 (einschl. des öffentlichen Schlüssels) können von der Issuing CA X21 in das ausgestellte Gerätezertifikat 201 übernommen werden. Nach dem Ausstellen des MDC 201 kann dieses von der Issuing CA X21 auf einem sicheren Weg X3 zum Gerätewerk X1 übertragen und anschließend auf das Gerät 200 gebracht werden (siehe FIG 9).

Aufgrund des oben Gesagten kann das Komponentenzertifikat 201 außer den herstellerspezifischen Gerätedaten, insbesondere dem Namen des Herstellers ("X") und des Fertigungswerkes ("X1"), der Seriennummer des Gerätes 200 sowie dem öffentlichen Schlüssel (engl. Public Key) zu dem zum Signieren des Zertifikatsantrags 203 verwendeten Geheimschlüssel 202 auch ein Zertifikat X210 der zugehörigen, übergeordneten Issuing CA X21, die für das Gerätewerk X1 namens "X1" zuständig ist, sowie das Root-Zertifikat X220 der zugehörigen, übergeordneten Root-CA X22, die die für den Hersteller X namens "X" zuständig ist, umfassen. All dies sind Beispiele der (für die Prüfung durchs das Anomaly Detection Tool 600) relevanten Gerätedaten.

Außerdem kann das Komponentenzertifikat 201 ID (engl. identification) des Antragstellers/Besitzers, einen Namen des Gerätes, einen Namen des Ausstellers (der Issuing-CA X21) sowie seinen Gültigkeitsraum ("gültig von ... bis ..."). Eine oder mehrere dieser Angaben können beispielsweise durch Normen, wie z.B. IEEE 802.1AR 2018 oder durch herstellerspezifische Normen vorgeschrieben sein.

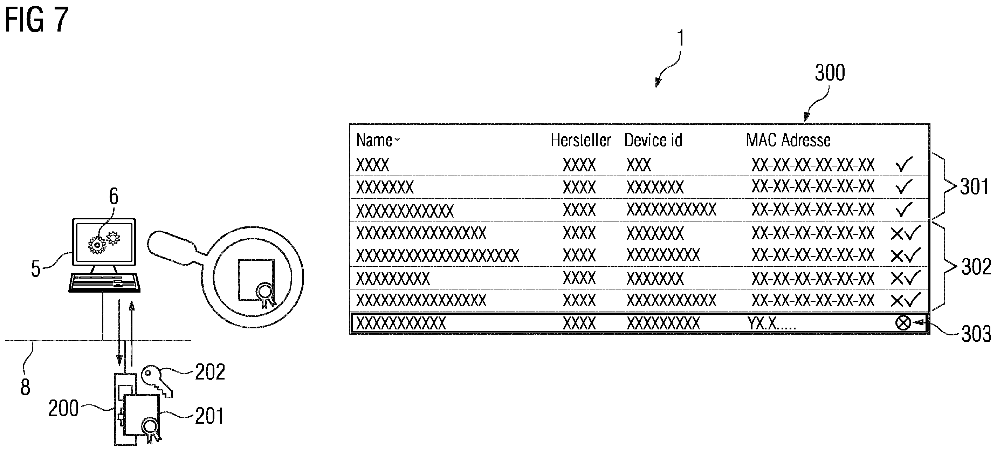

Figuren 5 bis 7 lassen erkennen, dass das zweite Modul 602 das Komponentenzertifikat 201 prüft. Die Prüfung findet interaktiv statt. Das Anomaly Detection Tool 600 tauscht dabei Informationen mit der Komponente 200 aus. Eine solche Interaktion ist bei Anomaly Detection Tools 6 nach dem Stand der Technik nicht vorgesehen (FIG 1 bis FIG 4). Für die Prüfung verwendet das Anomaly Detection Tool 600 relevante, beispielsweise herstellerspezifische Daten 901, die in einer vertrauenswürdigen Datenbank 900 verwahrt werden. Das zweite Modul 602, das beispielsweise als ein Softwaremodul ausgebildet ist, kann einen entsprechenden Programmcode umfassen, der Befehle aufweist, die beim Ausführen des Programmcodes, die interaktive Prüfung des Komponentenzertifikats 201 bewirken.

Die vertrauenswürdige Datenbank 900 kann beispielsweise dem Hersteller X der Komponente 200 gehören, z.B. als ein Zertifikat-Repository des Herstellers X ausgebildet sein.

Darüber hinaus kann das Anomaly Detection Tool 600 einen beispielsweise in dem zweiten Modul 602 angeordneten sicheren Speicher 6020 aufweisen, um die relevanten Daten 901 von der vertrauenswürdigen Datenbank 900 in regelmäßigen Zeitabständen oder ereignisgesteuert, z.B. wenn bei einer Änderung der releventen Daten 901 in der Datenbank 900, über auf sichere Art und Weise, z.B. über einen sicheren Kommunikationskanal zu beziehen und auf dem sicheren Speicher 6020 zu hinterlegen oder zu installieren.

Die relevanten Daten 901 können (herstellerspezifische) Vertrauensketten 9010 zum Komponentenzertifikat 201 und/oder Zertifikatssperrlisten (Listen der gesperrten Zertifikate) 9011 umfassen.

Basierend auf den relevanten Daten 901 kann das Anomaly Detection Tool 600 die Korrektheit, die Konsistenz und die Gültigkeit der Komponentenzertifikatsinhalte prüfen, eine Identitäts- und Originalitätsprüfung der Komponente 200 durchführen und einen Revokationsstatus des Komponentenzertifikats 201 überprüfen.

Während der interaktiven Prüfung kann die Komponente 200 ihren privaten Schlüssel zum Komponentenzertifikat 201 verwenden, ohne dabei diesen privaten Schlüssel 202 preiszugeben.

Das Ergebnis der Prüfung kann beispielsweise lauten: "Prüfung erfolgreich", "Prüfung fehlgeschlagen" oder "Prüfung nicht möglich".

Abhängig von dem Ergebnis der Prüfung generiert das Anomaly Detection Tool 600 eine Meldung und diese beispielsweise an eine zuständige Instanz absetzen.

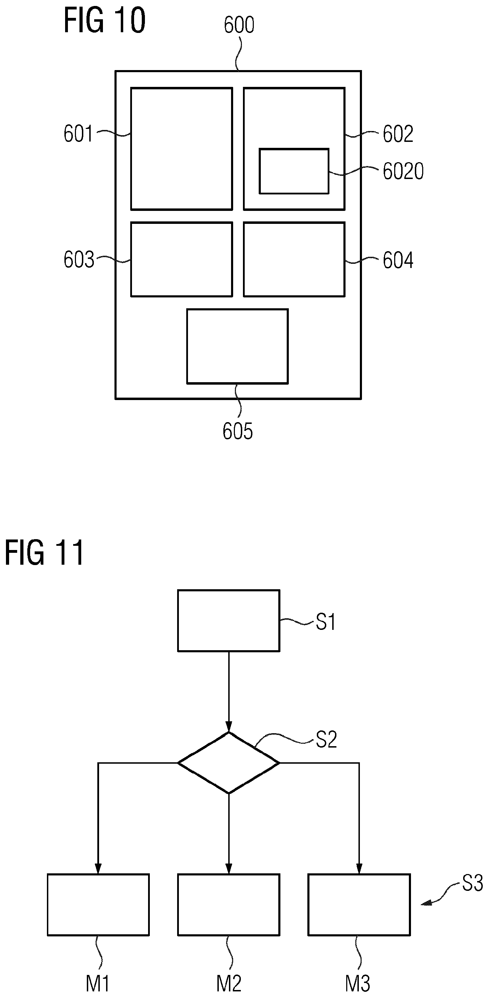

Nach der Prüfung können relevante, z.B. herstellerspezifische Informationen aus dem geprüften Komponentenzertifikat 201 in ein computerimplementiertes Geräteinventar 300 aufgenommen und dem Ergebnis der Prüfung gekennzeichnet, beispielsweise gehighlightet oder mit einem adäquaten Status und/oder Flag versehen werden. Dafür kann bei dem Anomaly Detection Tool 600 ein drittes Modul 603 vorgesehen sein (siehe FIG 10).

Das Anomaly Detection Tool 600 kann das computerimplementierte Geräteinventar 300 umfassen.

Bei einer erfolgreichen Prüfung können die relevanten, z.B. herstellerspezifischen Daten (insbesondere die jeweiligen MDCs) mit einem (ersten) Flag 301 "Identity / Originality: successfully checked" - in dem im Anomaly Detection Tool 600 enthaltenen computerimplementierten Geräteinventar 300 oder in dem Geräteinventar der Anlage (nicht gezeigt) sicher abgelegt werden.

Falls die Prüfung fehlgeschlagen ist, wenn beispielsweise das Komponentenzertifikat 201 bereits widerrufen wurde, kann ebenfalls eine entsprechende Meldung an die zuständige Instanz abgesetzt werden. Dabei können die der Prüfung unterzogenen relevanten, z.B. herstellerspezifischen Daten (insbesondere die jeweiligen MDCs) - versehen mit einem (zweiten) Status/Flag 302 (z.B. "Identity / Originality: check failed") - in dem eigenen integrierten Inventory 300 des Anomaly Detection Tools 600 oder im Inventory der Anlage (hier nicht gezeigt) sicher abgelegt werden.

Falls eine Prüfung z.B. aufgrund des Fehlens des Komponentenzertifikats 201 und/der des zugehörigen Geheimschlüssels nicht möglich ist, kann ebenfalls eine entsprechende Meldung (darüber, dass die Prüfung nicht möglich ist und dass das Gerät 200 somit nicht nachweisbar vertrauenswürdig ist) generiert und an eine zuständige Instanz übermittelt werden. In diesem Fall können die vorhandenen (nicht geprüften) relevanten Daten - versehen mit einem (dritten) Status/Flag 303 (z.B. "Identity / Originality: check infeasible") - in das Inventory 300 oder ein dediziertes Anlagen-Inventory (hier nicht gezeigt) aufgenommen werden.

FIG 10 lässt erkennen, dass das Anomaly Detection Tool 600 ein viertes Modul 604 umfassen kann, welches konfiguriert ist, unterschiedliche Prüfungsprofile für die Prüfung unterschiedlicher Komponenten zu erstellen und/oder zu konfigurieren und/oder zu nutzen, wobei die Prüfungsprofile einen Ablauf der Prüfung charakterisieren. Dies ist in jenem Fall vorteilhaft, in dem verschiedene Hersteller in ihren Geräten unterschiedliche Prüfverfahren implementiert haben.

FIG 10 ist zu entnehmen, dass das Anomaly Detection Tool 600 ein fünftes Modul 605 umfassen kann, das konfiguriert ist, in Abhängigkeit von dem Ergebnis der Prüfung unterschiedliche Aktionsprofile zu erstellen und/oder zu konfigurieren und/oder zu nutzen und/oder - insbesondere in einer besonders kritischen Umgebung - weitere Kommunikation zwischen der Komponente und/oder anderen Anlagenkomponenten zu unterbinden, z.B. wenn die Prüfung fehlgeschlagen ist oder nicht möglich ist.

FIG 11 zeigt ein Flussdiagramm einer Ausführungsform des erfindungsgemäßen Verfahrens zum Verifizieren von Komponenten eines industriellen Kontrollsystems. Dabei wird zunächst (Schritt S1) eine Vertrauensbeziehung mit einer Komponente des industriellen Kontrollsystems aufgebaut und ein Komponentenzertifikat von der Komponente abgefragt, wobei das Komponentenzertifikat relevante, z.B. herstellerspezifische Informationen bezüglich der Komponente aufweist.

Danach wird eine interaktive Prüfung des Komponentenzertifikats basierend auf in einer vertrauenswürdigen Datenbank verwahrten relevanten, z.B. herstellerspezifischen Daten durchgeführt (Schritt S2). Anschließend wird basierend auf einem Ergebnis der Prüfung eine Meldung generiert (Schritt S3).

FIG 11 zeigt ein Beispiel des Verfahrens, bei dem die Prüfung drei mögliche Ausgänge aufweist: M1 ("Prüfung erfolgreich"), M2 ("Prüfung fehlgeschlagen") und M3 ("Prüfung nicht möglich").

Das in FIG 11 illustrierte Verfahren mit Schritten S1 bis S3 kann beispielsweise in der in den Figuren 5 bis 10 beschriebenen Umgebung mittels des Anomaly Detection Tools 600 durchgeführt werden.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können das beschriebene Anomaly Detection Tool und das industrielle Kontrollsystem durch Merkmale des Verfahrens und das Verfahren durch Merkmale des Anomaly Detection Tools und des industriellen Kontrollsystems vervollständigt werden.

## Patentansprüche

1. System zum Verifizieren von Komponenten eines industriellen Kontrollsystems (100), wobei das System (600) umfasst
- ein erstes Modul (601), das konfiguriert ist, eine Vertrauensbeziehung in Form einer vertraulichen Verbindung mit einer Komponente (200) des industriellen Kontrollsystems (100) mit Hilfe einer in der Komponente (200) sicher hinterlegten Whitelist aufzubauen und ein Komponentenzertifikat (201) von der Komponente (200) abzufragen, wobei das Komponentenzertifikat (201) relevante Informationen bezüglich der Komponente (200) aufweist,
- ein zweites Modul (602), das konfiguriert ist, das Komponentenzertifikat (201)
* basierend auf in einer vertrauenswürdigen Datenbank (900) verwahrten relevanten Daten (901), wobei die relevanten Daten (901) eine oder mehrere Vertrauensketten (9010) und eine oder mehrere Zertifikatssperrlisten (9011) umfassen, und
* interagierend mit der Komponente (200) zu prüfen, wobei bei der Prüfung eine oder mehrere Vertrauensketten (9010) und eine oder mehrere Zertifikatssperrlisten (9011) validiert werden, und auf ein Ergebnis der Prüfung adäquat zu reagieren,
- ein weiteres Modul (605), das konfiguriert ist, auf das Ergebnis der Prüfung dadurch zu reagieren, indem in Abhängigkeit von dem Ergebnis der Prüfung weitere Kommunikation zwischen der Komponente und anderen Anlagenkomponenten unterbunden wird.

2. System nach Anspruch 1, wobei das System (600) einen sicheren Speicher (6020) aufweist und dazu konfiguriert ist, die relevanten Daten (901) von der vertrauenswürdigen Datenbank (900) in regelmäßigen Zeitabständen oder ereignisgesteuert über eine sichere Verbindung zu beziehen und auf dem sicheren Speicher (6020) zu hinterlegen oder zu installieren.

3. System nach Anspruch 2, wobei der Speicher (6020) als ein gegen unberechtigte Änderungen beziehungsweise Manipulationen geschützter Speicher ausgebildet ist.

4. System nach Anspruch 2 oder 3, wobei das zweite Modul (602) den Speicher (6020) umfasst.

5. System nach einem der Ansprüche 2 bis 4, wobei auf dem Speicher (6020) Zertifikate und den Zertifikaten zugeordneten Vertrauensketten und/oder Zertifikatssperrlisten abgelegt sind.

6. System nach einem der Ansprüche 1 bis 5, wobei die vertrauenswürdige Datenbank (900) als eine Zertifikat-Repository des Herstellers der Komponente (200) ausgebildet ist.

7. System nach einem der Ansprüche 1 bis 6, wobei das Komponentenzertifikat ein Herstellergerätezertifikat ist.

8. System nach einem der Ansprüche 1 bis 7, wobei das System (600) ein drittes Modul (603) umfasst, das konfiguriert ist, relevante Informationen aus dem Komponentenzertifikat (201) in ein computerimplementiertes Geräteinventar (300) aufzunehmen und diese relevanten Informationen entsprechend dem Ergebnis der Prüfung zu kennzeichnen, beispielsweise zu highlighten oder mit einem adäquaten Status und/oder Flag (301, 302,303) zu versehen.

9. System nach einem der Ansprüche 1 bis 8, wobei das System (600) ein viertes Modul (604) umfasst, das konfiguriert ist, unterschiedliche Prüfungsprofile für die Prüfung unterschiedlicher Komponenten zu erstellen und/oder zu konfigurieren und/oder zu nutzen, wobei die Prüfungsprofile einen Ablauf der Prüfung charakterisieren.

10. System nach einem der Ansprüche 1 bis 9, wobei die Komponente (200) konfiguriert ist, bei der Prüfung ihren privaten Schlüssel zum Komponentenzertifikat (201) zu verwenden, ohne diesen privaten Schlüssel preiszugeben.

11. Computerimplementiertes Verfahren zum Verifizieren von Komponenten eines industriellen Kontrollsystems (100), wobei
- eine Vertrauensbeziehung in Form einer vertraulichen Verbindung mit einer Komponente (200) des industriellen Kontrollsystems (100) mit Hilfe einer in der Komponente (200) sicher hinterlegten Whitelist aufgebaut und ein Komponentenzertifikat (201) von der Komponente (200) abgefragt wird, wobei das Komponentenzertifikat (201) relevante Informationen bezüglich der Komponente (200) aufweist,
- das Komponentenzertifikat (201) in Interaktion mit der Komponente (200) und basierend auf in einer vertrauenswürdigen Datenbank (900) verwahrten relevanten Daten (901) geprüft wird, wobei die relevanten Daten (901) eine oder mehrere Vertrauensketten (9010) und eine oder mehrere Zertifikatssperrlisten (9011) umfassen, wobei bei der Prüfung eine oder mehrere Vertrauensketten (9010) und eine oder mehrere Zertifikatssperrlisten (9011) validiert werden, und
- auf das Ergebnis der Prüfung dadurch adäquat reagiert wird, indem in Abhängigkeit von dem Ergebnis der Prüfung weitere Kommunikation zwischen der Komponente und anderen Anlagenkomponenten unterbunden wird.

12. Verfahren nach Anspruch 11, wobei die relevanten Daten (901) von der vertrauenswürdigen Datenbank (900) in regelmäßigen Zeitabständen oder ereignisgesteuert über eine sichere Verbindung bezogen und auf einem sicheren Speicher (6020) hinterlegt oder installiert wird.

13. Verfahren nach Anspruch 11 oder 12, wobei das Komponentenzertifikat ein Herstellergerätezertifikat ist.

14. Verfahren nach einem der Ansprüche 11 bis 13, wobei unterschiedliche Prüfungsprofile für die Prüfung unterschiedlicher Komponenten erstellt und/oder konfiguriert und/oder genutzt werden, wobei die Prüfungsprofile einen Ablauf der Prüfung charakterisieren.

15. Computerprogramm umfassend Befehle, die bei der Ausführung des Programms durch ein System dieses veranlassen, das Verfahren nach einem der Ansprüche 11 bis 14 auszuführen.

## Claims

1. System for verifying components of an industrial monitoring system (100), wherein the system (600) comprises
- a first module (601), which is configured to establish a relationship of trust in the form of a confidential connection to a component (200) of the industrial monitoring system (100) with the help of a whitelist securely stored in the component (200) and to request a component certificate (201) from the component (200), wherein the component certificate (201) contains relevant information relating to the component (200),
- a second module (602), which is configured to check the component certificate (201)
* on the basis of relevant data (901) kept in a trustworthy database (900), wherein the relevant data (901) comprises one or more trust chains (9010) and one or more certificate blacklists (9011), and
* in interaction with the component (200), wherein during the check one or more trust chains (9010) and one or more certificate blacklists (9011) are validated, and to respond appropriately to a result of the check,
- a further module (605) which is configured to respond to the result of the check by further communication between the component and other plant components being prevented as a function of the result of the check.

2. System according to claim 1, wherein the system (600) has a secure memory (6020) and is configured to obtain the relevant data (901) from the trustworthy database (900) at regular intervals or in an event-controlled manner via a secure connection and to store or install it in the secure memory (6020).

3. System according to claim 2, wherein the memory (6020) is embodied as a memory protected against unauthorized changes or manipulations.

4. System according to claim 2 or 3, wherein the second module (602) comprises the memory (6020).

5. System according to one of claims 2 to 4, wherein certificates and trust chains and/or certificate blacklists associated with the certificates are saved in the memory (6020).

6. System according to one of claims 1 to 5, wherein the trustworthy database (900) is embodied as a certificate repository of the manufacturer of the component (200).

7. System according to one of claims 1 to 6, wherein the component certificate is a manufacturer device certificate.

8. System according to one of claims 1 to 7, wherein the system (600) comprises a third module (603), which is configured to accept relevant information from the component certificate (201) into a computer-implemented device inventory (300) and in accordance with the result of the check to characterize this relevant information, for example to highlight it or provide it with an appropriate status and/or flag (301, 302, 303).

9. System according to one of claims 1 to 8, wherein the system (600) comprises a fourth module (604), which is configured to create and/or configure and/or use different check profiles for checking different components, wherein the check profiles characterize a procedure of the check process.

10. System according to one of claims 1 to 9, wherein the component (200) is configured to use its private key to the component certificate (201) during the check, without disclosing said private key.

11. Computer-implemented method for verifying components of an industrial monitoring system (100), wherein
- a relationship of trust in the form of a confidential connection with a component (200) of the industrial monitoring system (100) is established with the help of a whitelist securely stored in the component (200) and a component certificate (201) is requested from the component (200), wherein the component certificate (201) contains relevant information relating to the component (200),
- the component certificate (201) is checked in interaction with the component (200) and on the basis of relevant data (901) kept in a trustworthy database (900), wherein the relevant data (901) comprises one or more trust chains (9010) and one or more certificate blacklists (9011), wherein during the check one or more trust chains (9010) and one or more certificate blacklists (9011) are validated, and
- an appropriate response is given to a result of the check by further communication between the component and other plant components being prevented as a function of the result of the check.

12. Method according to claim 11, wherein the relevant data (901) is obtained from the trustworthy database (900) at regular intervals or in an event-controlled manner via a secure connection and is stored or installed in a secure memory (6020).

13. Method according to claim 11 or 12, wherein the component certificate is a manufacturer device certificate.

14. Method according to one of claims 11 to 13, wherein different check profiles are created and/or configured and/or used for checking different components, wherein the check profiles characterize a procedure of the check process.

15. Computer program comprising commands, which during the execution of the program by a system cause said system to execute the method according to one of claims 11 to 14.

## Revendications

1. Système de vérification de composants d'un système (100) de contrôle industriel, dans lequel le système (600) comprend
- un premier module (601), qui est configuré pour établir une relation de confiance sous la forme d'une liaison de confiance avec un composant (200) du système (100) de contrôle industriel, à l'aide d'une whitelist archivée de manière sûre dans le composant (200) et pour demander un certificat (201) du composant (200), dans lequel le certificat (201) au composant comporte des informations pertinentes concernant le composant (200),
- un deuxième module (602), qui est configuré pour contrôler le certificat (201) du composant
* en se fondant sur des données (901) pertinentes conservées dans une base (900) de données digne de confiance, dans lequel les données (901) pertinentes comprennent une ou plusieurs chaînes (9010) de confiance et une ou plusieurs listes (9011) de blocage de certificats, et
* en interagissant avec le composant (200), dans lequel, lors du contrôle, une ou plusieurs chaînes (9010) de confiance et une ou plusieurs listes (9011) de blocage de certificats sont validées, et pour réagir de manière adéquate à un résultat du contrôle,
- un autre module (605), qui est configuré pour réagir au résultat du contrôle en arrêtant, en fonction du résultat du contrôle, une communication supplémentaire entre le composant et d'autres composants de l'installation.

2. Système suivant la revendication 1, dans lequel le système (600) a une mémoire (6020) sécurisée et est configuré pour établir . par une liaison sécurisée les données (901) pertinentes de la base (900) de données digne de confiance dans des intervalles de temps réguliers ou commandés par un évènement et pour les archiver ou les installer sur la mémoire (6020) sécurisée.

3. Système suivant la revendication 2, dans lequel la mémoire (6020) est constituée sous la forme d'une mémoire protégée de modifications ou de manipulations non autorisées.

4. Système suivant la revendication 2 ou 3, dans lequel le deuxième module (602) comprend la mémoire (6020).

5. Système suivant l'une des revendications 2 à 4, dans lequel, sur la mémoire (6020), sont mis des certificats et les chaînes de confiance et/ou les listes d'interdiction de certificats associées au certificat.

6. Système suivant l'une des revendications 1 à 5, dans lequel la base (900) de données digne de confiance est constituée sous la forme d'un repository de certificat du fabricant du composant (200).

7. Système suivant l'une des revendications 1 à 6, dans lequel le certificat du composant est un certificat de fabricant.

8. Système suivant l'une des revendications 1 à 7, dans lequel le système (600) comprend un troisième module (603), qui est configuré pour recevoir des informations pertinentes composées du certificat (201) de composant dans un inventaire (300) d'appareils mis en œuvre par ordinateur et pour caractériser ces informations pertinentes conformément au résultat du contrôle, par exemple pour les mettre en exergue ou pour les munir d'un statut adéquat et/ou d'une étiquette (301, 302, 303). .

9. Système suivant l'une des revendications 1 à 8, dans lequel le système (600) comprend un quatrième module (604), qui est configuré pour établir et/ou pour configurer et/ou utiliser des profils de contrôle différents pour le contrôle de composants différents, dans lequel les profils de contrôle caractérisent un déroulement du contrôle.

10. Système suivant l'une des revendications 1 à 9, dans lequel le composant (200) est configuré pour, lors du contrôle, utiliser ces clés privées pour le certificat (201) du composant sans donner ces clés privées.

11. Procédé mis en œuvre par ordinateur de vérification de composants d'un système (100) de contrôle industriel, dans lequel
- on établit une relation de confiance sous la forme d'une liaison de confiance avec un composant (200) du système (100) de contrôle industriel, à l'aide d'une whitelist archivée dans le composant (200) et on demande au composant un certificat (201) du composant (200), dans lequel le certificat (201) du composant comporte des informations pertinentes concernant le composant (200),
- on contrôle le certificat (201) du composant en interaction avec le composant (200) et en se fondant sur des données (901) pertinentes conservées dans une base (900) de données digne de confiance, dans lequel les données (901) pertinentes comprennent une ou plusieurs chaînes (9010) de confiance et une ou plusieurs listes (9011) d'interdiction de certificats, dans lequel, lors du contrôle, on valide une ou plusieurs chaînes (9010) de confiance et une ou plusieurs listes (9011) de blocage de certificats, et
- on réagit de manière adéquate au résultat du contrôle en arrêtant, en fonction du résultat du contrôle, une communication supplémentaire entre les composants et d'autres composants de l'installation.

12. Procédé suivant la revendication 11, dans lequel on se procure par une liaison sécurisée à des intervalles de temps réguliers ou commandés par un évènement les données (901) pertinentes de la base (900) de données digne de confiance et on les archive, on les installe sur une mémoire (6020) sécurisée.

13. Procédé suivant la revendication 11 ou 12, dans lequel le certificat de composant est un certificat d'appareil de fabricant.

14. Procédé suivant l'une des revendications 11 à 13, dans lequel on établit, et/ou configure, et/ou utilise des profils de contrôle différents pour le contrôle de composants différents, dans lequel les profils de contrôle caractérisent un déroulement du contrôle.

15. Programme d'ordinateur comprenant des instructions, qui, lors de l'exécution du programme par un système, font que celui-ci exécute le procédé suivant l'une des revendications 11 à 14.
